# EUROPEAN PATENT SPECIFICATION

(11) **EP 3 481 779 B1**
(45) Date of publication and mention of the grant of the patent: **12.02.2025**
(21) Application number: 17824699.7
(22) Date of filing: 22.06.2017
(51) Int. Cl.: C02F 1/70, C02F 1/72, C02F 3/28, C02F 3/30, C02F 3/34, C02F 9/00

(54) **METHOD FOR NUTRIENT REMOVAL WITH CARBON ADDITION**
VERFAHREN ZUR NÄHRSTOFFENTFERNUNG MIT KOHLENSTOFFZUGABE
PROCÉDÉ POUR L'ÉLIMINATION DE NUTRIMENT AVEC ADDITION DE CARBONE

(30) Priority: 08.07.2016 US 201662359950 P
(43) Date of publication of application: 15.05.2019
(73) Proprietor: Hampton Roads Sanitation District, Virginia Beach, VA 23471-0911 (US); D.C. Water and Sewer Authority, Washington, DC 20032 (US); Murthy, Sudhir N., Washington, DC 20032 (US); Wett, Bernhard, 6020 Innsbruck (AT)
(72) Inventor: Murthy, Sudhir N., Washington, DC 20032 (US); De Clippeleir, Haydee, Washington, DC 20032 (US); Debarbadillo, Christine, Washington, DC 20032 (US); Bott, Charles B., Virginia Beach, VA 23471-00911 (US); Klaus, Stephanie, Virginia Beach, VA 23471-0911 (US); Wett, Bernhard, 6020 Innsbruck (AT)
(74) Representative: Ponti & Partners, S.L.P
(86) International application number: PCT/US2017/038826
(87) International publication number: WO 2018/009348

(56) References cited:
- EP-A2- 2 341 033
- CN-A- 104 310 580
- US-A- 5 342 522
- US-A1- 2011 084 022
- US-A1- 2011 100 908
- US-A1- 2012 261 335
- US-A1- 2014 069 864
- US-A1- 2014 263 041
- US-A1- 2015 284 280
- US-A1- 2016 145 131

## Description

### TECHNICAL FIELD

The invention relates to a wastewater treatment method for the biological removal of nitrogen with electron donor addition.

More specifically, this nitrogen removal may be the removal or partial removal of molecules including but not limited to nitrogen, nitrates, nitrites or other nitrogen compounds (denitrification or denitratation or denitritation or anammox). The methods of the invention involve the removal of nitrogen via the controlled addition of an external electron donor source including but not limited to acetate or glycerol at a specific zone, achieving a nitrate residual by minimizing chemical oxygen demand or COD, or fluctuating nitrate to a predetermined concentration in order to preserve a desirable quantity of nutrients.

### BACKGROUND

The present invention relates to denitrification in wastewater treatment processes through the use of electron donors. An electron donor is needed to achieve denitrification in wastewater treatment processes. Electron donors can be from organic carbon or inorganic chemicals. There are many different types of organic sources used in practice including but not limited to alcohols such as glycerol, methanol, ethanol; volatile fatty acids such as acetate; carbohydrates including but not limited to sugars, starch or cellulose; wastewater carbon, carbon from industrial wastes or manufacturing byproducts, methane, glycols, aldehydes or ketones. Inorganic sources include but are not limited to ammonia, sulfide and ferrous ions.

According to the invention there is provided a wastewater treatment method comprising:
receiving wastewater in one or more zones for biological nitrogen removal; and
performing a biological nitrogen removal process on said wastewater in said one or more zones, wherein said biological nitrogen removal process includes a first reaction, which is a partial denitrification reaction in which nitrate is reduced to nitrite under an anoxic condition, and a second reaction, in which part or all of the nitrite generated is used as an electron acceptor and reduced to dinitrogen by anammox bacteria, wherein said method comprises an oxidized nitrogen measurement, which is a measurement of the nitrate concentration,
said method being characterized in that it comprises, during the first reaction, adding of an electron donor, wherein the adding of the electron donor is controlled based on the measurement of the nitrate concentration to meet an effluent nitrate concentration set point, said nitrate concentration set point being higher than 1.5 mg N/L nitrate as nitrogen, wherein the electron donor includes a degradable carbon source including alcohols, volatile fatty acids, carbohydrates, wastewater carbons, carbon from industrial wastes or manufacturing byproducts, methane, aldehydes and/or ketones.

The present invention aims at the combined removal of ammonium and nitrates. Unlike prior art involving steps such as nitrifying reactors (WO 2006022539 A1), partial nitritation systems (CN105923774 A, chinese patents nr CN105129991A, CN103936150A, CN105110572A), anammox systems (chinese nr CN104291528A, CN104276657A) or other aerobic steps (chinese patent nr CN105923774A), the present invention does not involve such pretreatment steps prior to partial denitrification. The electron donor is added within the anammox reactor achieving partial denitrification and anammox reactions within a one sludge system unlike prior art applications applying a two stage approach (Chinese patent nr CN105923774A, CN104291528A, CN104310580A).

US 2016/145131 A1 discloses a method for biologically denitrifying waste water, includes a nitrification-denitrification sequence followed, for a first fraction of water, by a post-denitrification step during which an electron donor is injected into the first fraction, while a second fraction of water passes through a bypass, then is mixed with the first fraction downstream of the post-denitrification step.

US 2012/261335 A1 discloses a method for treating water laden with nitrogen in the form of ammonium by means of nitritation-denitritation. Said method includes at least: a first step (i) of supplying at least one sequential biological reactor (10) with said water; an aerated nitration step (ii); an anoxia denitritation step (iii); and a step (iv) of extracting treated water from said reactor. The method also includes the in-line measurement of the nitrite concentration of said water in said reactor.

US 2015/284280 A1 discloses a modified activated sludge-based two-compartment treatment method for processing nitrate-contaminated drinking water. Raw water is sent to a first Ti02-modified denitrifying activated sludge bioreactor, wherein organic carbon source is added in a controlled amount, and nitrate is partly reduced with nitrite being accumulated. The effluent from the first bioreactor is sent to a second Ti02-modified denitrifying activated sludge bioreactor, wherein organic carbon source and hydrogen gas are supplemented, and remaining nitrate and accumulated nitrite are reduced to nitrogen gas.

US 2014/0069864 A1 discloses a control method used for nitrogen removal in wastewater treatment to achieve measured control of maintaining high ammonia 10 oxidizing bacteria (AOB) oxidation rates while achieving nitrite oxidizing bacteria (NOB) out-selection, using various control strategies, including the use of ammonia setpoints.

According to preferred embodiments of the present invention, by precisely controlling/limiting the addition of organic carbon electron donor, and/or maintaining a nitrate residual, and/or maintaining a limited solids retention time, efficient selection for partial denitrification (denitratation) can be achieved. The anammox reaction can be maximized or facilitated by minimizing diffusion limitations by maintaining an ammonium residual concentration.

### SUMMARY

In this invention, we propose the use of an electron donor for denitrifying organisms to partially denitrify based on providingexcess residual nitrate, in isolation or in combination with solids retention time limiting, electron donor limiting, or excess residual ammonia conditions. In some embodiments of the present invention, denitrifying organisms can be specialist organisms that can only denitrify partially from nitrate to nitrite. In other embodiments, denitrifying organisms are more general organisms that use the complete step for denitrification, but are able to mostly denitratate (convert nitrate to nitrite) under the controlled conditions. In some such embodiments, the denitrifying organisms can be retained using support material such as synthetic carriers, encapsulation (in pure or mixed cultures), sand, anthracite, wood chips, stones or any other suitable media.

In other such embodiments, the denitrifying organisms in biofilms, on media, in ballasts, in flocculant or in granular form can be retained using physical selectors such as a screen, cyclone, airlift reactor, magnetic separator or other gravimetric, flotation, membrane or filtration device. In certain embodiments, with electron donor limitation, the use of the anammox reaction may be used (in the same reactor on in a separate reactor) for the removal of nitrite with ammonia as the electron donor, concomitant with the use of the limiting electron donors that will reduce nitrate to nitrite. In yet other embodiments, a sensor for oxidized nitrogen can be used to calibrate the stoichiometry of the external carbon addition. A small amount of residual ammonia in the effluent may be preferred in order to ensure that the anammox reaction dominates for the reduction of nitrite when a single reactor is used for both denitrifying steps (from nitrate to nitrite and from nitrite to nitrogen gas).

In some embodiments of the present disclosure, anammox organisms may be bioaugmented to the reactor where the denitrification reactions are performed. The bioaugmentation could occur from sidestream or streams in series or parallel to the reactor. Anammox organisms may also be bioaugmented from this reactor to other reactors if needed in other embodiments. The anammox organism may be collected and then transferred to other processes to perform the anaerobic ammonium oxidation reactions. Such a reactor may comprise processes including, but not limited to, any fixed film, granular or suspended growth biological process. In certain such embodiments, ammonia may be delivered to the reaction step as a residual from previous reactions or as a bypass stream from upstream or sidestream processes. In some such embodiments, the anammox organisms can be retained using support material including, but not limited to, synthetic carriers, sand, anthracite, wood chips, stones, membrane biofilms or encapsulated in pure or mixed cultures or any other suitable media.

In other embodiments, the anammox organisms may be retained using physical selectors including, but not limited to, screens, cyclones, airlift reactor, magnetic separator or other gravimetric, flotation and filtration devices. In certain embodiments, the reactor or reaction step may be a dedicated anoxic zone or zones within an existing biological nutrient removal process or in an integrated or separate polishing step. In certain such embodiments, an oxidized nitrogen stream may be recycled to the anoxic zones to provide the electron acceptor. In certain embodiments, bioaugmentation of a limited amount of denitrifying organisms can be included to allow for denitratation. In yet other embodiments, the anammox reaction can occur in an anoxic biofilm in an aerated zone through diffusion limitation of oxygen within the biofilm.

The present invention therefore allows for electron donor for denitrifying organisms to partially denitrify (such as denitratate) based on a nitrate residual. The invention involves the use of denitrifying organisms which may be generalist or specialist, additions including, but not limited to, anammox bioaugmentation to the denitrification reactor accomplished by retention of anammox organisms using support material or physical selectors, or an anammox reaction in an anoxic biofilm in an aeration zone. The denitratation organisms can also be bioaugnmented if required. There may further exist other reactions not explicitly mentioned or described herein. The invention relates to a wastewater treatment method as described in the independent claim 1. Preferred embodiments of the method are defined in the dependent claims 2-4.

### BRIEF DESCRIPTION OF THE DRAWINGS

The accompanying drawings are incorporated in and form a part of the specification, wherein:
FIG. 1 depicts Nitrogen reactions that are managed according to methods according to embodiments of the invention.
FIG. 2a is a graph depicting the partial denitrification percentage (%) versus the maximum potential AnAOB rate over observed nitrate rate ratio in methods according to embodiments of the invention.
FIG. 2b is a graph displaying the Total N removal rate (mg-N/gVSS/d) versus the maximum potential AnAOB rate over observed nitrate rate ratio in methods according to embodiments of the invention.
FIG. 3 depicts microbial mass and population control within biological or synthetic structures depending on the availability of electron donor as well as the degree of competition for space between denitritation, denitratation and anammox organisms which occur when carrying out methods according to embodiments of the invention.
FIG. 4 is a detailed schematic of a pilot application in which a method according to an embodiment of the invention is integrated within the biological nutrient removal system, as final anoxic zones, and in which anammox is selectively retained using screens of 212 um pore size.
FIG. 5 is a chart showing the long term influent and effluent levels of a partial denitrification system with controlled COD addition suitable for carrying out methods according to embodiments of the invention in order to maintain nitrate residual of 6-7 mg NO3-N/L.
FIG. 6 shows a concentration profile (A1) and a rate profile (A2) for nitrate and nitrite under acetate-COD/NOx dosing of 3 in the absence of AnAOB observed whilst carrying out a method according to embodiments of the invention.
FIG. 7 shows a concentration profile (C1) and a rate profile (C2) for nitrate and nitrite under acetate-COD/NOx dosing of 10 in the absence of AnAOB observed whilst carrying out a method according to embodiments of the invention
FIG. 8 shows a concentration profile (E1) and a rate profile (E2) for nitrate and nitrite under acetate-COD/NOx dosing of 3 in the presence of AnAOB (50% of MLSS) by carrying out a method according to embodiments of the invention. Additional COD at the same ratio of 3 was dosed every 60 minutes.
FIG. 9 shows the last anoxic zones of a mainstream pilot for carrying out a method according to embodiments of the invention with acetate addition at 20 minutes at COD/NOx of 3 and at 60 minutes of COD/N of 0 (A), 3 (B) and 12 (C). The partial denitrification potential at the cells of dosing in relation to NO3 residual at 60 minutes is shown in panel D.
FIG. 10A represents application options for carrying out a method according to embodiments of the invention as a separate step with denitritation and anammox applied in a one-sludge system including selective anammox retention (S/L separation) with energy donor addition as separate stream (1.1) or within the wastewater matrix (1.2).
FIG. 10B represents application options for carrying out a method according to embodiments of the invention as a separate step with denitritation and anammox applied in a two-sludge system including separate sludge retention control (S/L separation) with energy donor addition as separate stream (1.1) or within the wastewater matrix (1.2).
FIG. 11A2 represents application options for carrying out a method according to embodiments of the invention as post treatment step after a biological nutrient removal process with denitritation and anammox applied in a one-sludge system including selective anammox retention (S/L separation) with energy donor addition as separate stream.
FIG. 11B2 represents application options for carrying out a method according to embodiments of the invention as post treatment step after a biological nutrient removal process with denitritation and anammox applied in a two-sludge system including separate sludge retention control (S/L separation) with energy donor addition as separate stream.
FIG. 12A represents application options for carrying out a method according to embodiments of the invention integrated as a one-step denitritation/anammox step, including selective anammox retention (S/L separation) within a biological nutrient removal system as dedicated zones with external carbon source addition (3.1) or as first zones using a NOx return stream and energy donor from the wastewater matrix (3.2).
FIG. 12B represents application options for carrying out a method according to embodiments of the invention integrated as a two-step denitritation/anammox step, including selective anammox and denitritation sludge retention time control (S/L separation) within a biological nutrient removal system as dedicated zones with external carbon source addition (3.1) or as first zones using a NOx return stream and energy donor from the wastewater matrix (3.2).
FIG. 13 is a schematic diagram of apparatus which may be used to carry out methods according to embodiments of the invention and for controlling and operating methods of the present disclosure.
FIGS. 14-16 are flowcharts for control algorithms used when carrying out methods according to embodiments of the invention for the processes illustrated in FIG. 13.

### DETAILED DESCRIPTION

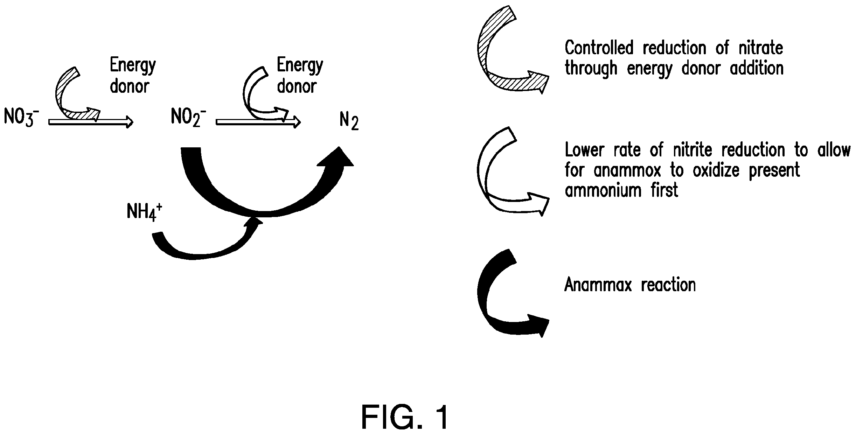

FIG. 1 shows the nitrogen reactions aimed for in accordance with preferred embodiments of the present invention. An energy donor addition controls the reduction of nitrate to nitrite, where after anammox bacteria compete for the nitrite to oxidize ammonium. Denitratation is referred to as the reduction from nitrate to nitrite, whereas denitritation is referred to as the reduction of nitrite. Within the present disclosure, minimization of denitritation is preferred.

Maximization of reaction 1 (nitrate to nitrite) and reaction 2 (ammonium + nitrite to nitrogen gas) is aimed for by optimization of electron donor addition, nitrate residual, ammomium residual and/or sludge retention time (SRT). Reaction 3 (nitrite to nitrogen gas) and reaction 4 (aerobic ammonium oxidization to nitrite or nitrate) are managed to meet effluent treatment requirements and/or nitrite availability within the system.

The balance between denitratation, denitritation and anammox was studied based on a series of batch experiments using a mixture of anammox sludge and denitrifying sludge fed with ammonium (5 mg N/L) and nitrate (10 mg N/L), different energy donors (acetate, methanol, ethanol and glycerol) and with different COD/N ratio (0-2), to evaluate the impact of energy donor source as well as rate of dosing on non-adapted sludge. None of the above factors by itself was identified as a key parameter for denitratation selection. From all carbon sources tested, however, acetate showed the highest potential for enhanced denitratation (and thus nitrite accumulation) independent of anammox competition for nitrite. It has been described in literature that alcohols might be toxic to anammox bacteria. Therefore, for application of certain carbon sources, application of the denitratation and anammox step in a two sludge system might be essential for protecting the anammox bacteria from potential toxicity. Alternatively, operation in thick biofilm or granules, or operation at electron donor limitation will achieve the same protection.

Overall, the energy donor for denitritation, denitratation or denitrification can be any degradable carbon source including alcohols, such as alcohols including but not limited to glycerol, methanol, glycols, ethanol; volatile fatty acids including but not limited to acetate, acetic acid; carbohydrates including but not limited to sugars, starch, or cellulose, wastewater carbon, carbon from industrial waste or manufacturing byproducts, methane, aldehydes or ketones; or any inorganic electron donor such as sulfurous or ferrous sources. While we have used glycerol, methanol, ethanol and acetate in our experiment, other electron donors can be used to achieve denitratation as well.

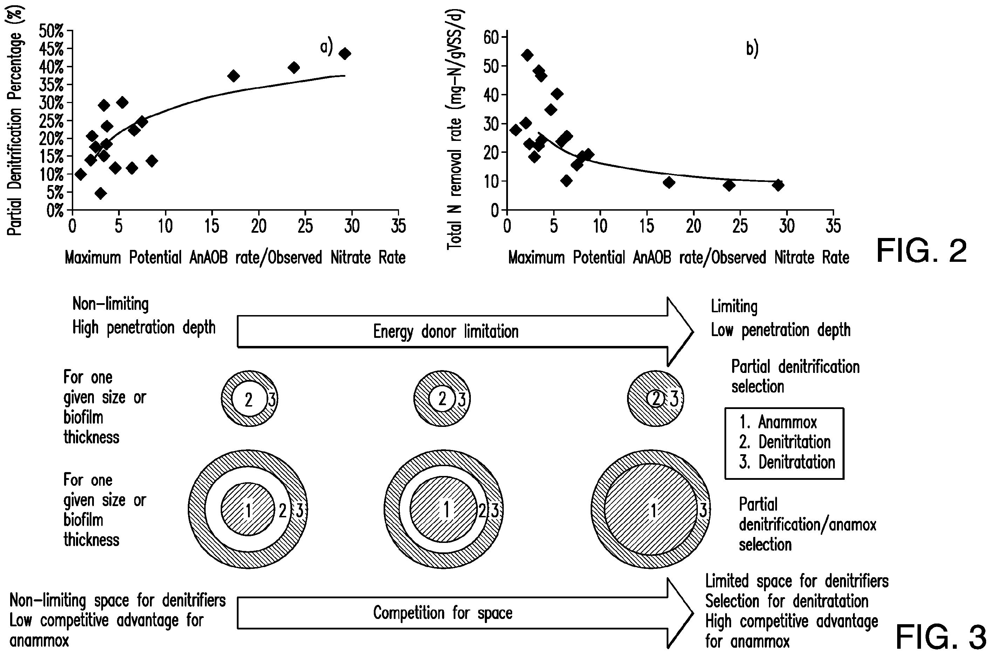

An important factor in non-adapted sludge to allow for successful application is related to balancing the activity rate between denitrifiers and anammox bacteria to achieve a balance between ammonium removal and total nitrogen removal rate. To confirm the importance of that factor, an additional set of activity tests was performed which showed that increasing the ratio between maximum anammox potential versus observed nitrate rate (controlled by COD addition), results in increased denitratation (and thus ammonium removal) but also affected the total nitrogen removal in a negative way (FIG. 2). This was mainly due to the fact that nitrate rates determined total nitrogen rates more significantly while ammonium removal was limited by nitrite competition between anammox bacteria and denitrifiers.

FIG. 3 shows the control of denitratation and anammox reaction within biofilms and/or synthetic matrix systems. Specific carriers that allow for biofilm thickness control, usually about 50-400 um biofilms, can be used to balance diffusion rates for energy donor and nitrate with denitratation selection through direct sludge retention control in separated denitratation systems. Competition for space within biofilms, encapsulation matrices and sludge aggregates or granules allows for the out-selection of denitritation and potential selection for specialist denitratation organisms.

In one-sludge systems based on biofilm based anammox retention, direct control of biofilm thickness (about 50-400 um (or, even more preferably, 50-400 um)) can manage the denitritation mass compared to anammox mass (FIG. 3) and thus allows for selection for denitratation instead of full denitrification. Alternately, biofilms of longer solids retention time (such as for anammox) can be developed on thin biofilms to reduce diffusion resistance. The proper balance between anammox mass versus denitratation mass will determine efficiency of ammonium removal as well as total nitrogen removal (FIG. 2). The same balance can be found through selection on the proper granule size and/or encapsulation matrix size (50-2000 um).

Alternative to biofilm thickness or granule size control, sludge retention time control allows for selection of denitratation over denitritation. In addition to energy donor limitation, sludge retention time can be limited or decreased to allow for selection. In suspended systems, time is the competition parameter rather than space (as in biofilm systems) (FIG. 3).

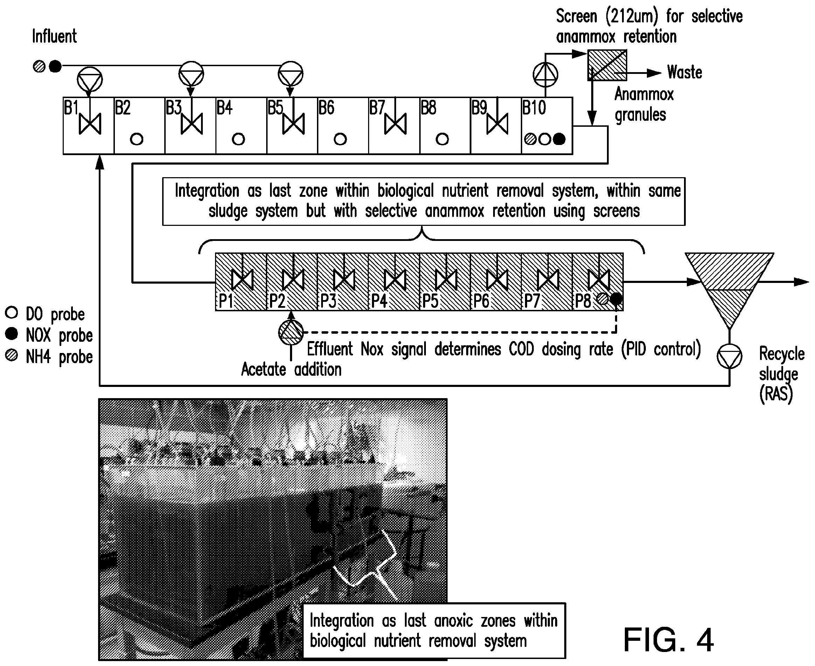

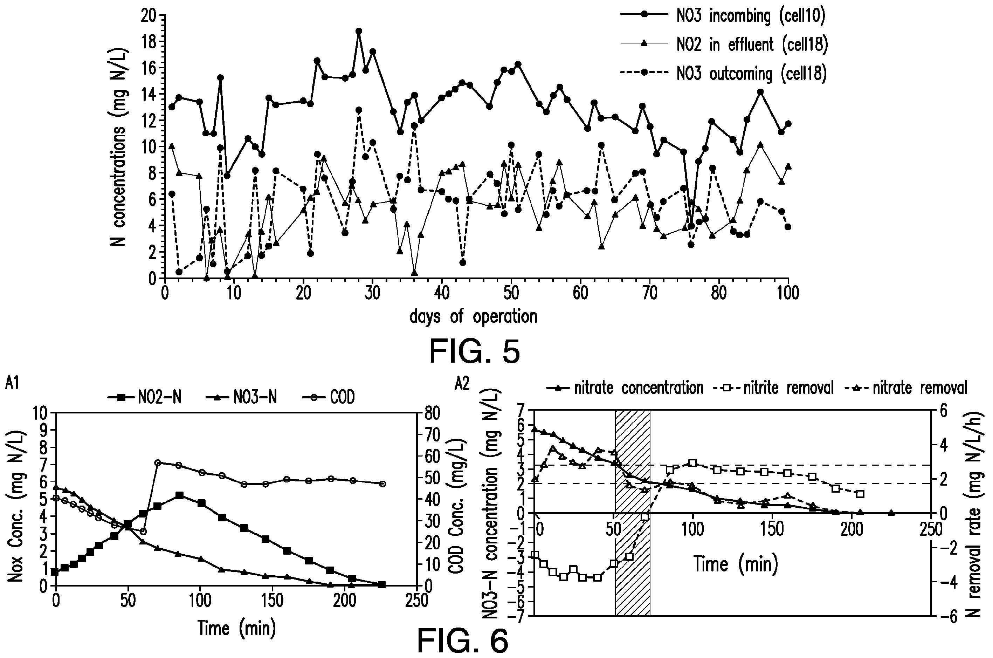

The long-term addition of acetate in the last anoxic zone of a biological nutrient removal step (FIG. 4) was studied as part of a short-cut nitrogen removal process application. The advantage of this application is the decreased need for aeration as part of the ammonium is consumed by anammox and the decreased electron donor need for nitrate reduction. FIG. 5 shows the long term influent and effluent NOx levels of the denitratation system (last eight reactor zones of reactor shown in FIG. 4). Within this system, acetate was dosed using PID controller to maintain nitrate residual concentration of 6-7 mg N/L. As a result, efficient nitrite accumulation was achieved with average nitrite concentration in effluent of 5.5 mg N/L. The COD dosing to achieve the nitrate residual stabilized at a dosing rate of 2 g COD added per g NO3-N fed to the system. On average, a denitratation efficiency of 81±9% was achieved. When organic carbon in the form of acetate was added to a plug flow system to reach 5 mg NO3-N/L in the first 30% of the anoxic reactor volume and a similar addition of COD was added downstream of the first dosing point to allow for full denitrification leading to 2 mg NO3-N/L at the second COD dosing point (in middle of plug flow reactor - 50% point) and 0.5 mg NOx/L at the effluent after 3^{rd} dosing point (at 75% anoxic volume point), a decreased denitratation only efficiency was observed in the first 30% of anoxic volume despite the increased nitrate residual. It was hypothesized that the increased anoxic SRT under lower nitrate residual concentration decreased the established metabolic imbalance between nitrate reductase activity and nitrite reductase activity. It is anticipated that when about 50% of the anoxic volume is run at nitrate residual below 2 mg N/L, about 50% loss in denitratation only potential is predicted.

At the moment that selection for denitratation occurs, nitrite can accumulate when operated as a separate step or when anammox rate is limited. The latter nitrite accumulation can increase selection for denitratation due to free nitrous acid accumulation limiting the growth of heterotrophic organisms. In some embodiments, autotrophic organisms (plants, algae and certain bacteria) may be utilized in the same manner. However, it has been shown that heterotrophic organisms are more sensitive to free nitrous acid than nitrite oxidizing organisms or anammox. Protection of anammox in thick biofilm, granules or through encapsulation while exposure of denitritation and denitratation organisms to higher free nitrous acid concentration will therefore stabilize denitratation even under sub-optimal conditions.

During periods with anammox bioaugmentation and thus simultaneous nitrate and ammonium removal, anammox was selectively retained using a 212 um screen while all other organisms (nitrifiers, heterotrophic organisms, denitritation organisms, denitratation organisms) were operated at similar total SRT (FIG. 4). Anammox granules were daily bioaugmented from a sidestream deammonification system allowing for an anammox biomass fraction of 5-30 % of the mixed liquor suspended solids.

When the right electron donor is selected to donate most electrons upstream from cytochrome c (and thus where nitrite reductase can get electron), given the higher electron accepting capacity of nitrate reductase versus nitrite reductase, electron transport to nitrite reductase is minimized until nitrate concentrations become limited. However, this imbalance may be minimized where longer anoxic times (SRT) are employed under low nitrate residual at which nitrite reductase can get enough electrons donated again. Therefore a balance may be created between minimum nitrate levels and SRT at such low nitrate levels to balance requirements of denitratation only selection with required discharge limits. Overall, average or median nitrate residual concentrations can be used, over longer time constants to optimize the SRT required to maintain a stable denitratation rate. This is a key feature of using nitrate residual over shorter time constants to manage electron donor dosage and longer time constants to manage SRT.

When employed in conjunction, limiting electron donor supply and anoxic SRTs can also result in effective denitratation either due to the selection of certain specialist bacteria or adaptation of generalist bacteria or a combination thereof.

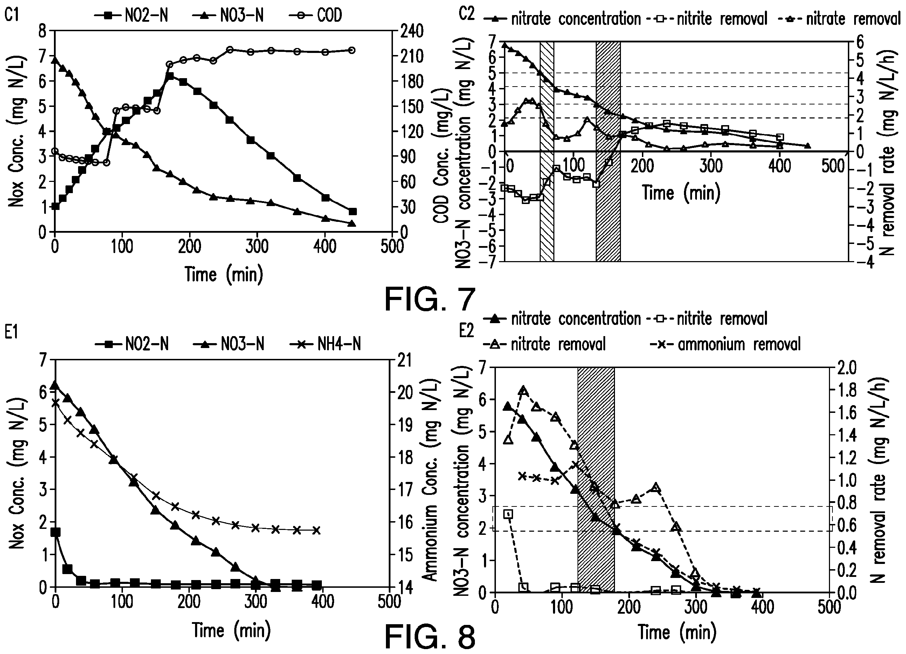

FIGS. 6-8 are graphical representations of several tests involving COD dosing over time or nitrate residual adjustment resulting in denitrification or denitratation. Without the presence of anammox bacteria, nitrite accumulation rate was equal to the nitrate reduction rate up to a nitrate level of 2-3 mg N/L at limited COD addition of acetate-COD/NOx-N of 3, added every hour of the test (FIG. 8.A1). At lower nitrate levels (<2 mg N/L), full denitrification was established.

When more COD (under non-limiting conditions) was dosed to the system (COD/NOx-N of 10) at every hour of the test, a reduced nitrate removal rate was observed at a nitrate level of 4-5 mg NO3-N/L (FIG. 7.C1). However, there was still a 100% conversion of nitrate to nitrite at this point and thus no total nitrogen removal was observed. Similarly to the tests with lower COD/N doses, also in this test full denitrification started at a nitrate residual of 2-3 mg NO3-N/L (FIG. 7.C2). This suggests that a nitrate residual is beneficial for denitratation when COD is non-limiting.

Enriched anammox sludge originating from a sidestream deammonification reactor (675 mg VSS/L) was mixed into the mainstream sludge (790 mg VSS/L) and a similar test as in FIG. 6.A1 was performed at COD/N addition of 3, added every 60 minutes (FIG. 8.E1). The soluble COD present in the test was fluctuating between 23 and 42 mg COD/L without any clear trend that can allow for COD removal rate calculation (as also the case in FIG. 6.A1). Addition of the anammox sludge eliminated the nitrite accumulation and thus the potential impact of nitrite or free nitrous acid on the selection for 100% denitratation. This test showed a decrease of the denitratation (and thus full denitrification) occurrence starting from nitrate levels of 2 mg N/L, and thus similar levels as observed before. These results were very similar to the initial results presented in FIG. 6.A1. When NO3-N residual was above 3 mg N/L, a stoichiometry factor of 1.48 between nitrate removal rates and ammonium removal rates was observed, which is very close to the theoretical anammox stoichiometry factor of 1.32.

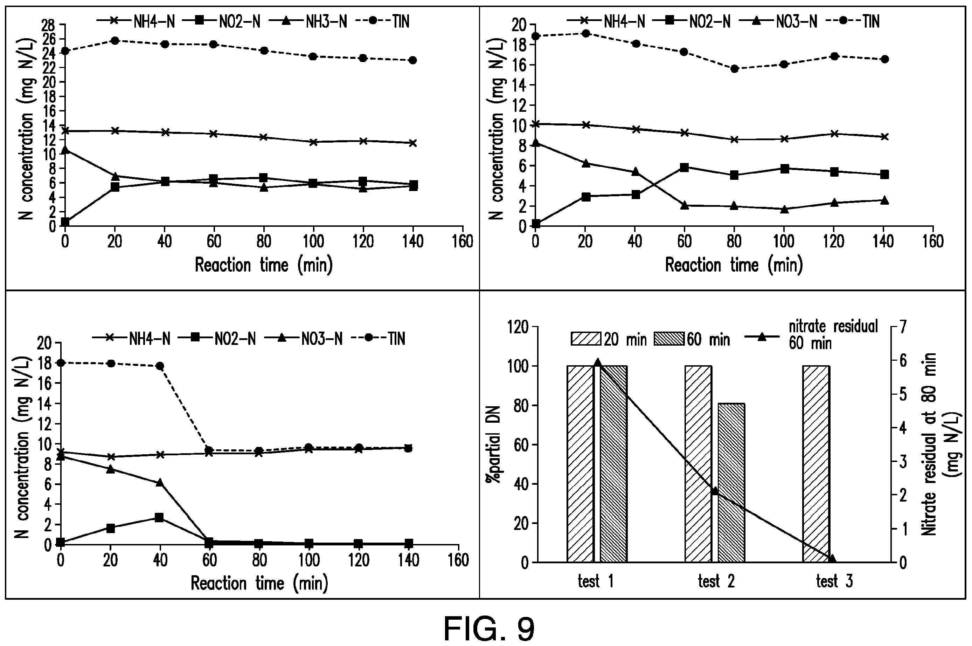

FIG. 9 provides profiles of the last anoxic zones of the mainstream pilot with acetate addition at 20 minutes at COD/NOx of 3 and at 60 minutes of COD/N of 0 (A), 3 (B) and 12 (C). The partial denitrification potential at the cells of dosing in relation to NO3 residual at 60 minutes is shown in panel D. At steady state operation, acetate addition stabilized at a dose of COD/NOx of 2-3 to reach nitrate level of 5 mg N/L in the effluent. To test the importance of nitrate residual, additional dosing of acetate was performed at 60 min retention time of the anoxic plug flow zone of the mainstream pilot. An additional dose at COD/NOx of 3 allowed the nitrate to decrease to 2 mg N/L, and the denitratation remained efficient but decreased a bit to 80% instead of the 100% denitratation observed for nitrate levels above 5 mg N/L (FIG. 9). At higher addition (COD/N of 12) and thus nitrate levels of 0.1 mg N/L, full denitrification and thus nitrite removal was observed (FIG. 9). This correlated well with the observation from the batch experiments.

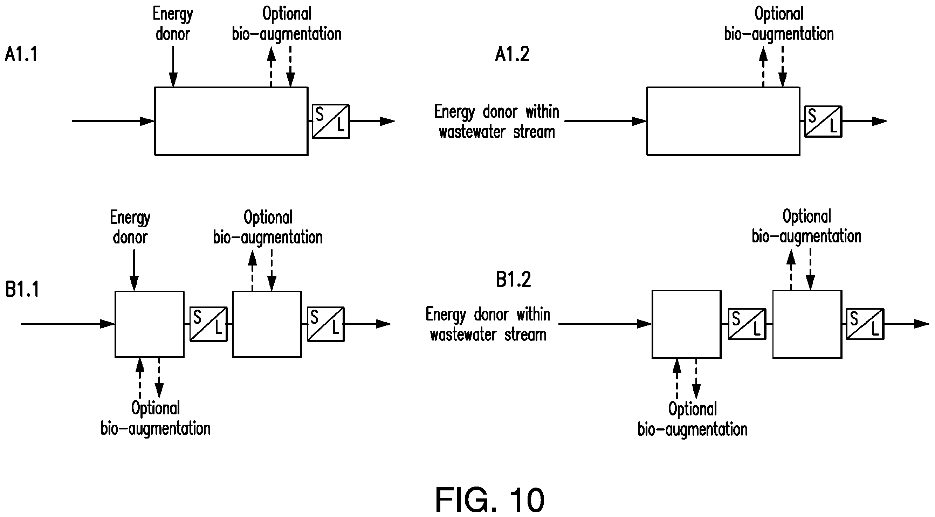

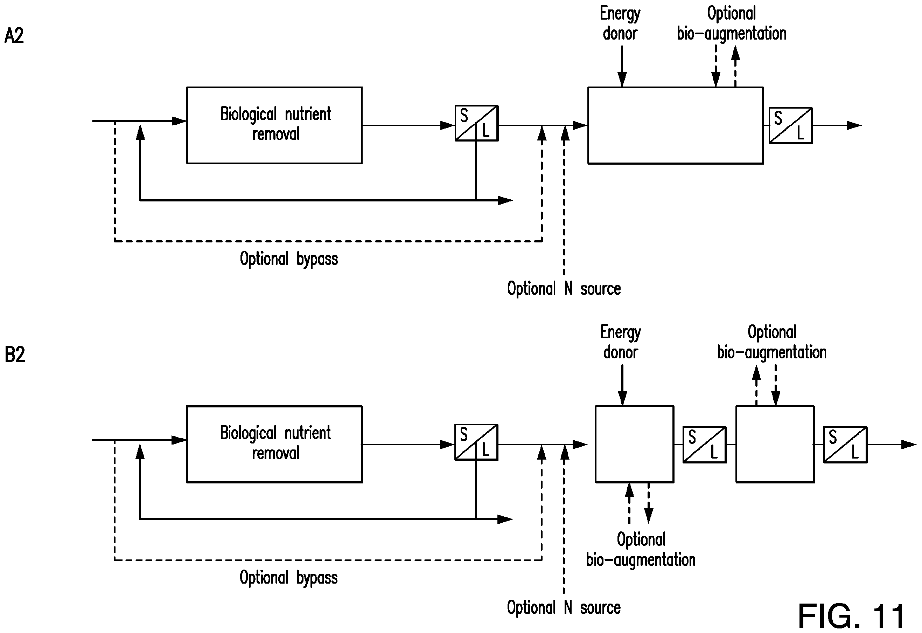

Embodiments of the invention can be applied as a one-sludge system in which both denitratation reactions as well as anammox reactions take place in the same reactor system as suspended, biofilm, granular or a combination of suspended, biofilm, and/or granular. The sludge retention time of anammox is enhanced through selective retention using sequencing batch reactors, carriers, support material, screens, cyclones, airlift reactor, magnetic separator, clarifiers or any other gravimetric, flotation and filtration devices. Control of denitratation SRT can be managed through biofilm thickness control (FIG. 2), hydraulic retention time control, overall sludge retention time control, or it can be dependent on the system conditions where it is applied. Examples of application are shown in FIGS. 10A, 11A2 and 12A.

Other embodiments of the invention can be applied as a two-sludge system in which denitratation reactions are controlled separately from the anammox step. Denitratation control is based on a combination of COD limitation based on nitrate residual and SRT. SRT control can be done by, for example, wasting of suspended biomass, bioaugmentation, biofilm thickness control, settling rate selection, particle size or particle density based selection or retention. A specialized organism can be used, retained or selected that can only perform a partial reduction step from nitrate to nitrite and is grown in suspension, granules, on media or in encapsulation. The denitrifying organisms can be retained using support material such as synthetic carriers, sand, anthracite, wood chips, stones, membrane biofilms or is encapsulated in pure or mixed cultures in natural or synthetic carriers. Alternatively, the denitrifying organisms are retained by physical selectors such as screens, cyclones, airlift reactor, magnetic separator, clarifier or other gravimetric, flotation and filtration devices. The subsequent anammox step treats the formed nitrite and ammonium in a second reactor or reactor zone. Anammox retention in this step is performed by the same technological options as applied in the one-step systems. The advantage of this approach is that denitratation selection is performed completely independent of anammox retention and thus allows for a more specific organism selection. Examples for application are shown in FIG 10B, 11B2 and 12B.

In all embodiments of the invention, bioaugmentation of anammox or denitratation organisms to the process from other reactors, zones or locations can be added. Also, bioaugmentation of one or more selected organisms cultivated in the embodiment can be bioaugmented to other applications and reactors. The BNR reactor can receive bioaugmentation of heterotrophs or autotrophs including anammox organisms from a high strength reactor having a reactor feed concentration greater than 200 milligram ammonium nitrogen per liter. The bioaugmentation of organisms can be in the form of suspended growth in flocs or granules, or attached growth on plastic, sand, anthracite, expanded clay, ceramic, sponges, activated carbon, magnetite, alumina, silica, porous or non-porous rock, wood chips or cellulose rich material, starch or other carbonaceous support material, selectively inhibitory material, iron or iron rich material, stones, shells, rubber, resins, including nitrate or ammonium selective resins, membrane biofilms or encapsulated in pure or mixed cultures, materials rich in electron donor, electron acceptor or rich in micronutrients.

The process can be applied by itself (FIG. 10) when ammonium and oxidized nitrogen species are already present in the water/wastewater matrix. The energy donor can either be added as an external source or it can be integrated within the wastewater stream (FIG. 10).

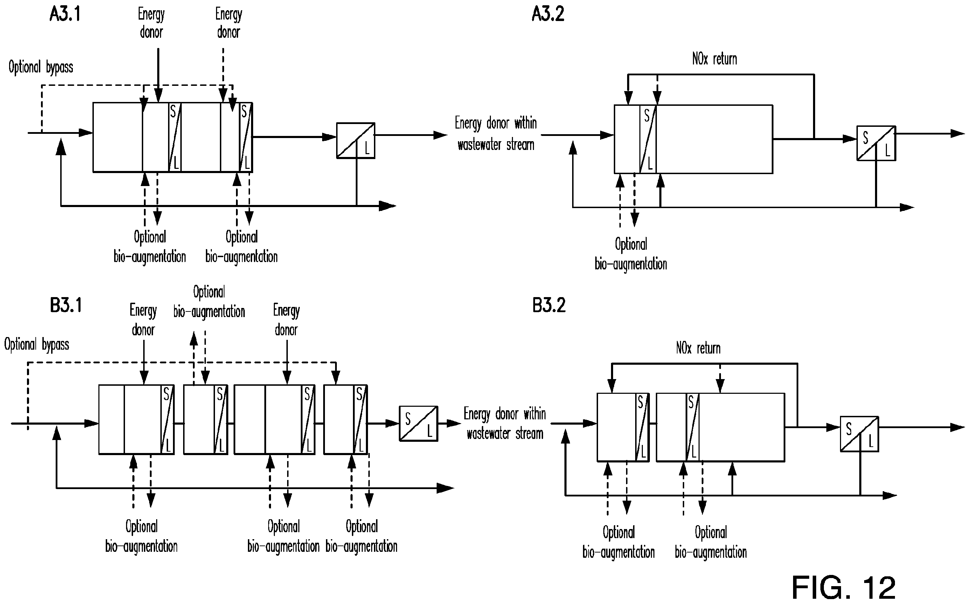

To achieve the right ammonium versus oxidized nitrogen ratio for the process, a bypass of an ammonium stream can be applied in different applications (FIGS. 11 and 12).

The process can be applied within the biological nutrient removal step as a dedicated zone or zones with external energy donor addition (FIGS. 12A3.1 and 12B3.1). In addition, it can be integrated as a (first) anoxic zone receiving a NOx return and a carbon source from the wastewater and/or externally. The latter application can allow for achieving enhanced nitrogen removal in biological systems with a minimum input of resources such as electrical energy for aeration and external carbon source for full denitrification. In this configuration, with inclusion of anammox, mainstream short-cut nitrogen removal can be achieved without the need for efficient nitrite oxidizing bacteria out-selection, which has been identified as a major challenge in this field. The present invention will overcome the current limitation through focusing on denitratation instead of nitritation as a requirement.

In the applications shown in FIGS. 10, 11, and 12, a sensor or measurement may be used to control the ammonium concentration in the effluent to approximately half a milligram N/L to two milligram N/L. The latter target has been observed as being the half saturation constant for anammox organisms at mainstream applications and can thus be considered as the lowest ammonium concentration achievable without the loss in observed anammox rates.

The process can be applied as a post treatment of a biological nutrient removal system (FIG. 11). The preferred ammonium versus NOx ratio needed for efficient nitrogen removal within the process can be managed through proper aeration control within the biological nutrient removal system or by applying a bypass of wastewater containing ammonium. The biological nutrient removal system may have any suitable configuration, including incorporation of the application within the biological system as presented in FIG. 12.

The biological nutrient removal reactor (BNR) can be an activated sludge process, a filter, a mono-media or multi-media filter, an upflow or downflow biological anoxic or aerated filter, a fabric filter, a fluidized bed reactor, continuous backwash filter, a fuzzy filter, an integrated fixed film activated sludge process, a polymeric membrane biofilm reactor, a ceramic membrane biofilm reactor a moving bed biofilm reactor, a membrane bioreactor or a hybrid of any of these reactors.

The BNR system has a volume or a series of volumes and is thereby equipped for dosing electron donor or organic substrate in one or more volumes. The multiple volumes can be in distinct tanks, multiple zones within a single tank, single or multi-media in single or multiple filters or reactors.

The filter or reactor media can be plastic, sand, anthracite, expanded clay, ceramic, sponges, activated carbon, magnetite, alumina, silica, porous or non-porous rock, wood chips or cellulose rich material, starch or other carbonaceous support material, selectively inhibitory material (such as nitrite or free nitrous acid containing material that inhibit certain organisms and not others), iron or iron rich material, stones, shells, rubber, resins including nitrate or ammonium selective resins, membrane biofilms or encapsulated in pure or mixed cultures, materials rich in electron donor, electron acceptor or rich in micronutrients.

An apparatus suitable for carrying out embodiments of the invention can be integrated into a multi-zone moving bed bioreactor or multi-zone filter system, or membrane biofilm reactor or suspended growth, or a hybrid combination thereof in series having a first zone including a denitratation and anammox reaction zone in which the electron donor addition is controlled to achieve a nitrate residual, followed by an optional second denitrification zone in which optional additional electron donor is added to achieve full denitrification and low nitrate concentration, and an optional final post aerobic zone removing residual ammonium, only if needed based on an ammonia treatment objective, is added after the first or second zone. Within this configuration, a zone can be a stage within a multistage reactor separated by virtual or real walls. A zone can be part of aggregate, biofilm or granule such as the inner core or out prefer (FIG. 3). A zone may also be a media within a multimedia filter, or a separation between sheltered or non-sheltered within the same media.

The aerobic oxidation of ammonium to nitrite or nitrate can also be achieved by using a membrane aerated biofilm reactor within the anoxic zone.

The process according to the present invention can be applied as a two zone process where denitratation and/or full denitrification is used as pretreatment before a partial nitritation-anammox system to remove organics that cause toxicity or inhibition on aerobic ammonium oxidizing bacteria and/or anoxic ammonium oxidizing bacteria before those compounds reach the organisms. Nitrate formed within the partial nitritation-anammox stage can be recycled to the denitratation stage to provide enough electron acceptor. The amount of electron donor provided can be controlled by the dilution rate of the wastewater stream using the nitrate recycle flow rate.

The wastewater treatment method comprises:
receiving wastewater in receiving wastewater in one or more zones for biological nitrogen removal; and
performing a biological nitrogen removal process on said wastewater in said one or more zones, wherein said biological nitrogen removal process includes a first reaction, which is a partial denitrification reaction in which nitrate is reduced to nitrite under an anoxic condition, and a second reaction, in which part or all of the nitrite generated is used as an electron acceptor and reduced to dinitrogen by anammox bacteria, wherein said method comprises an oxidized nitrogen measurement, which is a measurement of the nitrate concentration,
said method being characterized in that it comprises, during the first reaction, adding of an electron donor, wherein the adding of the electron donor is controlled based on the measurement of the nitrate concentration to meet an effluent nitrate concentration set point, said nitrate concentration set point being higher than 1.5 mg N/L nitrate as nitrogen, wherein the electron donor includes a degradable carbon source including alcohols, volatile fatty acids, carbohydrates, wastewater carbons, carbon from industrial wastes or manufacturing byproducts, methane, aldehydes and/or ketones.

Within the controller, an electron donor or organic substrate dosing rate range may be set and its upper and lower bound for dosing rate can be changed depending on the desired nitrate, nitrite or ammonium concentration leaving or entering the system.

Sludge retention times of denitrifying organisms can be done by management of anoxic volumes or times, by managing wasting rates, by backwashing solids or by controlling biofilm thickness. The latter can be done by appropriate selection of media, and through physical or chemical abrasion techniques including, but not limited to, cyclone, airlift reactor, screening, mixing, and air scouring.

Within biofilm systems, two types of biofilms can be differentiated. Sheltered biofilm is biofilm that grows within protected pores of media or on the surface of media within protected zones. This biofilm is protected from physical shear, and the biofilm thickness and/or retention is determined by microbial activity and microbial kinetics. It is especially important for sheltered biofilm to retain slow-growing organisms such as anammox organisms or organisms that need relative longer SRT (such as autotrophs) compared to their competitor organism. Example of media that can support sheltered biofilm include, but are not limited to, expanded clay, ceramics, lava rock, iron rich material, plastic or activated carbon. Iron rich material may, in addition to the sheltered biofilm, provide the micronutrient for anammox growth and assist with biofilm attachment. The second type of biofilm is a non-sheltered or scoured biofilm that is subject to backwash, air scour or shear and this biofilm is controlled by physical forces rather than microbial kinetics. Within this biofilm, fast growing organisms such as heterotrophic organisms will grow, and one can use physical forces to control their solids retention time. Media that support the second type of biofilm include, but are not limited to, sand, anthracite, clay or plastic.

To maintain a differential SRT between denitrifying organisms and anammox organisms, one may select anammox growing in sheltered biofilm and denitrifying organisms growing in non-sheltered biofilms. Especially in filters or moving bed biofilm reactors, where SRT control can only be done by physical forces, protecting anammox organisms from those forces is important to maintain the potential for ammonium removal and thus competition for nitrite. The single or multi-media used according to present disclosure may thus have a combination of sheltered and scoured biofilms to maintain differential solids retention times to support different organism groups, including denitratation organisms, anammox organisms, or a combination thereof.

The nitrate to nitrite conversion rate during denitrification is a faster rate compared to nitrite reduction, especially when nitrate residual is present. Therefore, operation at lower SRT will gradually select for more specialist denitratation organisms or lead to selective denitratation capacity of generalist organisms, compared to operation at long SRT which will maintain a more diverse community structure (composition) or function. Once a more specialist community or function is selected for, characterized by a lack of denitrification genes or reduced expression thereof, for the later denitrification steps, nitrate residual can potentially be decreased while efficient partial denitrification (denitratation) is maintained. The longer the SRT, the potentially higher nitrate residual needed to select for efficient denitratation.

As the controller determines electron donor or organic substrate dosing based on a nitrate set-point, the electron donor dosing rate change over time can provide an indication of the efficiency of the process. The higher the electron donor rate becomes, given a similar nitrate removal rate, or when electron donor rates are normalized for nitrate removal, the less efficient the denitratation selection is, and the more important it is to operate at either (i) a higher nitrate set-point (option 1) and/or (ii) at increased wasting rates (option 2), or increased frequency of a device controlling wasting. The first option (increased nitrate set-point) may allow for operation at maximum nitrate reduction rates, creating a rate differential with the later denitrification steps and thus allowing for nitrite accumulation and thus increased potential anammox contribution while maintaining or minimizing electron donor addition. Operation at decreased SRT (option 2), allows for a growth selection of denitratation versus full denitrification, again by making use of the kinetic rate differential between nitrate reduction and nitrite reduction.

The decision for option 1 or option 2 is determined by the time step. While the change of nitrate set-point is a short term decision and thus fast response, SRT selection is a slower response, and the change in wasting rate is determined based on an evaluation of an average electron donor rate over an extended period of time. Also, nitrate set-point changes are a more applicable option for reactor types that do not allow for precise SRT control, for example, moving bed bioreactors and filters. Options 1 and 2 may be combined within the overall SRT control strategy by determining the wasting rate, and thus the SRT of the system, by evaluating the change of the nitrate set-point over an extended period of time compared to a provided nitrate set-point.

Based on the above explanation, anoxic solids retention times associated with the reactor can be controlled by adjusting flow rate or frequency of a flow device wasting or backwashing the solids, to maintain a certain COD or electron donor dosing rate or normalized COD dosing or electron donor rate per total inorganic nitrogen removed, by sensing and measuring COD dosing rate and/or nitrate, nitrite and ammonium removal rates that are suitable for maximizing the process rate for denitratation and/or anammox within the reactor.

Alternatively, the anoxic solids retention time associated with the reactor can be controlled by adjusting flow rate or frequency of a flow device wasting or backwashing the solids, to maintain a certain nitrate set-point by sensing and measuring nitrate concentrations that are suitable for maximizing the process rate for denitratation and/or anammox within the reactor.

In case nitrite effluent levels are observed, either due to a lack of anammox contribution or due to ammonium limitation, a lower nitrate residual can be chosen to increase electron donor addition and thus allow for increased full denitrification. This can prevent discharge of nitrite. On the other hand, nitrite and/or nitrate concentration coming out of the partial denitratation-anammox step can be removed from the effluent by an additional denitrification step. Within this step, either electron donor in the effluent of the previous step can be used or additional electron donor might be provided to reduce nitrate and nitrite to dinitrogen gas. Alternatively, when nitrate limits allow, nitrite can be oxidized in a post aerobic step to nitrate to prevent nitrite from being discharged. The additional denitrification step and/or the additional aerobic step can be implemented in space or time within the BNR system.

An ammonium residual (0.5-2 mg N/L) is desired to maintain increased anammox rates and thus provide an increased nitrite sink within the system. This allows for an easier control of partial denitratation selection. Ammonium set-point may be chosen based on discharge limits or desired anammox contribution. The ammonium concentration in the effluent measured by an ammonia sensor for sensing ammonia nitrogen in the reactor, and for generating ammonia concentration signal differs is compared to a defined set-point. A controller processes the ammonia signal and the difference to the set-point, and controls the upper or lower bound on COD dosing, nitrate or nitrite set-point, dissolved oxygen concentration, duration of an aerobic period, and/or duration of an anoxic period in one or more volumes of the reactor.

When ammonium residual is too low, one can either change the lower bound of the COD dosing rate within the controller, increase the nitrate set-point or decrease the dissolved oxygen concentration or aerobic volume to minimize ammonium oxidation. When ammonium is too high, a limitation in anammox activity exists, and thus it may be desirable to increase the competition for nitrite by increasing nitrate set-point, decreasing SRT to washout denitrifying organisms, lower the upper COD dosing rate within the controller, increase anoxic time to provide more time for reaction, or increase aerobic oxidation by increasing dissolved oxygen concentration or increasing aerobic volume or time.

Electron donor dosing may be controlled to meet an effluent nitrate set point. However, to further maximize anammox activity, as indicated by ammonia removal, the process can be controlled using online ammonia and nitrate sensors in the influent and effluent (or process), and the ratio of nitrate removal to ammonia removal may be used to control the upper bound on carbon dosing, such that maximum (or improved) nitrogen removal is achieved and anammox activity is maximized (or improved).

One or more computerized algorithms may be developed using machine learning, artificial intelligence, or neural networks approaches to develop an electron donor dosing protocol that includes, but is not limited to, the variable of influent chemical oxygen demand to influent milligram nitrate-nitrogen ratio, the residual nitrate-nitrogen concentration, and the anoxic solids retention time associated with the first reaction. Such algorithms can reside in an edge computing FOG computing or cloud computing framework, with improvements to the algorithms made periodically.

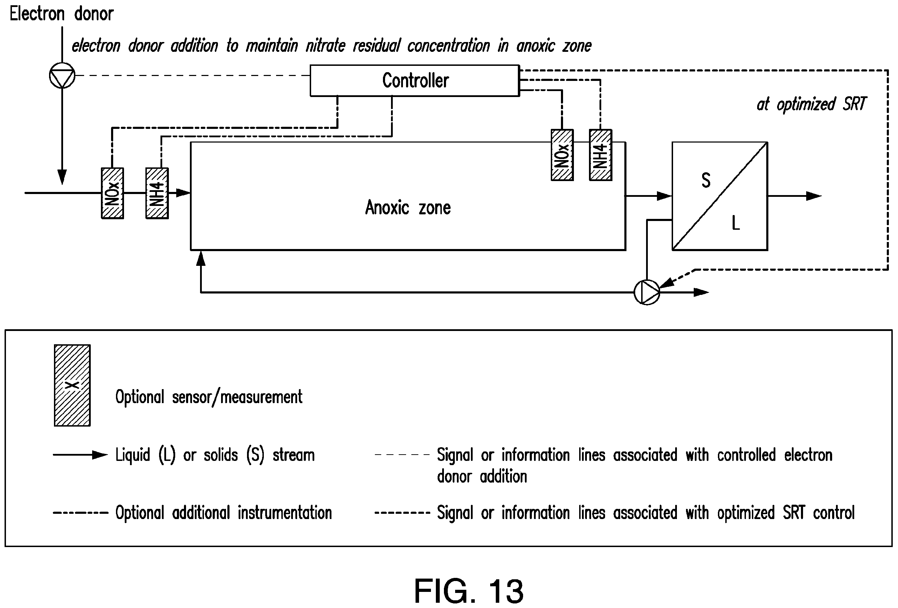

FIG. 13 shows equipment, information, and signal processing lines for managing the first reaction (nitrate reduction to nitrite) controlling the electron donor addition to maintain limited electron donor availability to maintain a nitrate residual within the anoxic zone. Sludge retention time (SRT) controller is used to optimize the SRT in combination with a given nitrate residual. Optional sensors or measurements could involve oxidized nitrogen sensors and/or ammonium, as illustrated in FIG. 13.

According to one embodiment illustrated in FIG. 13, wastewater is received through an influent passage, which receives electron donor from a valved electron donor passage, and which feeds into an anoxic zone. A signal representative of the concentration of nitrate in the anoxic zone is generated by a sensor, which may be, for example, a NOx sensor. The signal is received by a controller, which responds to the signal by generating a control signal to control the valve of the electron donor passage, to maintain a desired nitrate residual concentration in the anoxic zone.

According to one embodiment illustrated in FIG. 13, wastewater is received through an influent passage, which receives electron donor from a valved electron donor passage, and which feeds into an anoxic zone. A solid/liquid separator (S/L) separates a solids (sludge) stream from the effluent of the anoxic zone. The solids stream may be (1) returned to the anoxic zone or (2) wasted according to the control of a valve (the latter valve is shown in FIG. 13 underneath the anoxic zone and the solid/liquid separator (S/L)). The return/waste/backwash valve is controlled by a controller to maintain the desired solids residence time (SRT) in the process. SRT set-point, backwash frequency, washout of denitritation organisms or its analog is controlled based on average nitrate residual concentration. The absolute value of SRT and/or thickness of biofilms may never be known, but the relative nature of the SRT can be surmised from the metabolic behavior and the overall denitrification or anammox reactions.

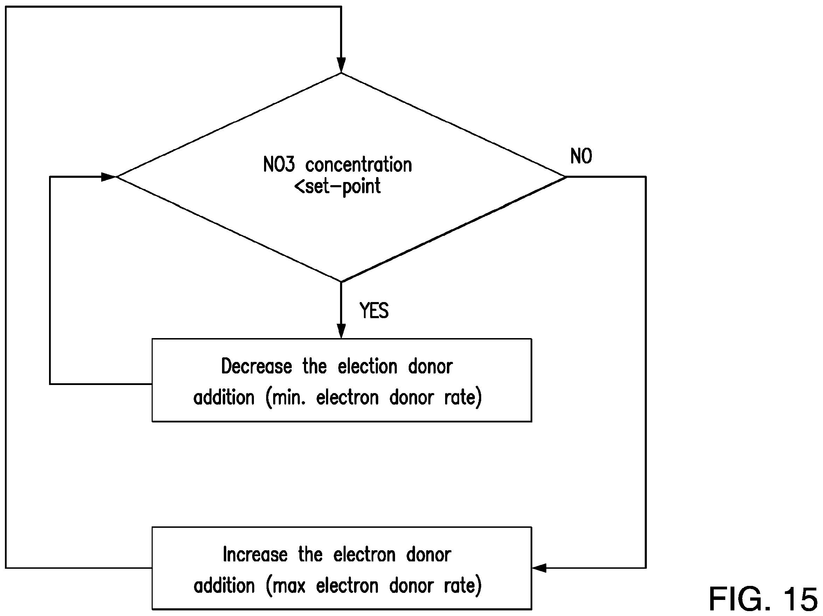

FIG. 15 is an algorithm for the controller of FIG. 13. As illustrated in FIG. 15, the controller may include control logic for selection for partial denitrification (nitrate to nitrite reduction) by controlling the COD/N dosing rate to maintain a nitrate residual within the anoxic zone equal or higher than 1.5 mg N/L. The minimum and maximum COD/N dosing rate settings can be adjusted based on a desired ammonium removal rate or based on the anammox removal rate or based on the optimized relative SRT.

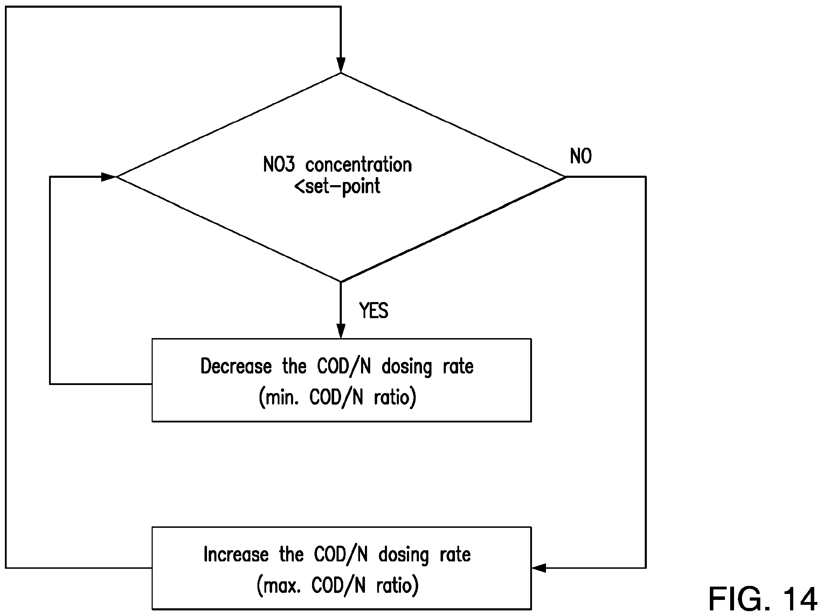

FIG. 14 is an algorithm for the controller of FIG. 13. As illustrated in FIG. 14, the controller may have control logic for selection for partial denitrification (nitrate to nitrite reduction) by controlling the electron donor rate to maintain a nitrate residual within the anoxic zone equal or higher than 1.5 mg N/L. The minimum and maximum electron donor rate settings can be adjusted based on a desired ammonium removal rate or based on the anammox removal rate or based on the optimized relative SRT.

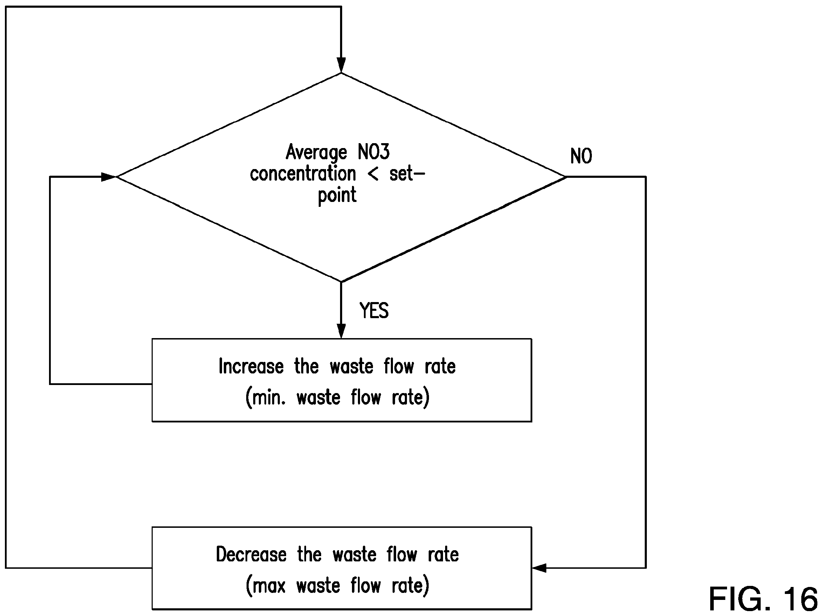

FIG. 16 is an algorithm for the controller of FIG. 13. According to FIG. 16, the controller may have control logic for selection for partial denitrification (nitrate to nitrite reduction) by controlling waste flow rate or the frequency of the wasting device to maintain a nitrate residual within the anoxic zone. The time constant of this control loop is longer than for the electron donor addition control and allows for stabilization of the microbial community selected. The relative optimized SRT set-point associated with a preferred nitrate residual will depend on wastewater characterization and reactor technology used. The minimum and maximum wasting flow rate settings can be adjusted based on a desired ammonium removal rate or based on the anammox removal rate or based on the optimized relative SRT.

### References

Kazulyuzhnyi, S., et al. (2007). "Phylogenetic analysis of a microbial community from a DEAMOX reactor carrying out anaerobic ammonia oxidation under sulphide-driven denitrifying conditions" Presented at Poster Session PT02 - Microbial Diversity 11th IWA World Congress on Anaerobic Digestion, 23-27 September 2007, Brisbane, Australia
Kalyuzhnyi, S., Gladchenko M., Mulder A., and Versprille B. (2006). "DEAMOX - new biological nitrogen removal process based on anaerobic ammonia oxidation coupled to sulphide driven conversion of nitrate into nitrite." Water Res., 40, 3637-3645
PENG YONGZHEN et al., "Device and method for realizing sludge digestive fluid advanced nitrogen removal by three-section type short-cut nitrification-anaerobic ammonia oxidation-short-cut denitrification process" CN Patent CN105923774 (A). September 7, 2016.

## Claims

1. A wastewater treatment method comprising:
receiving wastewater in one or more zones for biological nitrogen removal ; and
performing a biological nitrogen removal process on said wastewater in said one or more zones, wherein said biological nitrogen removal process includes a first reaction, which is a partial denitrification reaction in which nitrate is reduced to nitrite under an anoxic condition, and a second reaction, in which part or all of the nitrite generated is used as an electron acceptor and reduced to dinitrogen by anammox bacteria, wherein said method comprises an oxidized nitrogen measurement, which is a measurement of the nitrate concentration,
said method being **characterized in that** it comprises, during the first reaction, adding of an electron donor, wherein the adding of the electron donor is controlled based on the measurement of the nitrate concentration to meet an effluent nitrate concentration set point, said nitrate concentration set point being higher than 1.5 mg N/L nitrate as nitrogen, wherein the electron donor includes a degradable carbon source including alcohols, volatile fatty acids, carbohydrates, wastewater carbons, carbon from industrial wastes or manufacturing byproducts, methane, aldehydes and/or ketones.

2. The method of claim 1, further comprising an ammonia measurement, and wherein the oxidized nitrogen measurement optionally further includes measurement of nitrite, nitrous oxide, nitric oxide or combination thereof, and wherein the wastewater treatment method includes using an algorithm to process the ammonia and oxidized nitrogen measurements to control or adjust:
a upper or lower bound on electron donor dosing, and/or
b nitrite concentration or its set-point, and/or
c duration of an anoxic period, and/or
d aeration requirements or duration of aerobic period, and/or
e dissolved oxygen concentration or its set-point based on an ammonia concentration and the oxidized nitrogen measurement in order to support the required stoichiometry for the second or subsequent reaction or reactions.

3. The method of claim 1 or claim 2, wherein the biological nutrient removal reactor receives bioaugmentation of heterotrophs or autotrophs including and not limited to anammox organisms from a high strength reactor having a feed concentration greater than 200 milligram ammonium nitrogen per liter.

4. The method of claim 1, further comprising an ammonia measurement, wherein the ammonia concentration is maintained at an ammonia concentration set point of half a milligram to two milligrams nitrogen per liter, so as to maximize anammox reactions.

## Patentansprüche

1. Abwasserbehandlungsverfahren umfassend:
Aufnahme von Abwasser in einer oder mehreren Zonen zur biologischen Stickstoffentfernung; und
Durchführen eines biologischen Stickstoffentfernungsverfahrens an dem Abwasser in der einen oder den mehreren Zonen, wobei das biologische Stickstoffentfernungsverfahren eine erste Reaktion, die eine partielle Denitrifikationsreaktion ist, bei der Nitrat unter anoxischen Bedingungen zu Nitrit reduziert wird, und eine zweite Reaktion, bei der ein Teil oder das gesamte erzeugte Nitrit als Elektronenakzeptor verwendet wird und durch Anammox-Bakterien zu Distickstoff reduziert wird, umfasst, wobei das Verfahren eine Messung von oxidiertem Stickstoff umfasst, die eine Messung der Nitratkonzentration ist,
wobei das Verfahren **dadurch gekennzeichnet ist, dass** es während der ersten Reaktion Zugabe eines Elektronendonors umfasst, wobei die Zugabe des Elektronendonors auf der Grundlage der Messung der Nitratkonzentration gesteuert wird, um einen ausfließenden Nitrat-Konzentrations-Sollwert zu erreichen, wobei der Nitrat-Konzentrations-Sollwert höher als 1,5 mg N/L Nitrat als Stickstoff ist, wobei der Elektronendonor eine abbaubare Kohlenstoffquelle, die Alkohole, flüchtige Fettsäuren, Kohlenhydrate, Abwasserkohlenstoffe, Kohlenstoff aus Industrieabfällen oder Produktionsnebenprodukten, Methan, Aldehyde und/oder Ketone umfasst, enthält.

2. Verfahren nach Anspruch 1, ferner umfassend eine Ammoniakmessung, und wobei die Messung des oxidierten Stickstoffs gegebenenfalls ferner Messung von Nitrit, Distickstoffoxid, Stickstoffoxid oder einer Kombination davon umfasst, und wobei das Abwasserbehandlungsverfahren Verwendung eines Algorithmus umfasst, um die Ammoniak- und oxidierter Stickstoff-Messungen zu verarbeiten, um zu kontrollieren oder anzupassen:
a Ober- oder Untergrenze für Elektronendonor-Dosierung, und/oder
b Nitritkonzentration oder deren Sollwert, und/oder
c Dauer einer anoxischen Periode, und/oder
d Belüftungsbedarf oder Dauer von aerober Phase, und/oder
e Konzentration von gelöstem Sauerstoff oder dessen Sollwert auf der Grundlage einer Ammoniakkonzentration und der oxidierten Stickstoff-Messung, um die erforderliche Stöchiometrie für die zweite oder nachfolgende Reaktion oder Reaktionen zu unterstützen.

3. Verfahren nach Anspruch 1 oder Anspruch 2, wobei der biologische Nährstoffentfernungs-Reaktor Bioaugmentation von heterotrophen oder autotrophen Organismen enthält, einschließlich, aber nicht beschränkt auf Anammox-Organismen aus einem Hochleistungsreaktor mit einer Einspeisungskonzentration größer als 200 Milligramm Ammoniumstickstoff pro Liter.

4. Verfahren nach Anspruch 1, ferner umfassend eine Ammoniakmessung, wobei die Ammoniakkonzentration auf einem Sollwert der Ammoniakkonzentration von einem halben Milligramm bis zwei Milligramm Stickstoff pro Liter gehalten wird, um die Anammox-Reaktionen zu maximieren.

## Revendications

1. Procédé de traitement d'eaux usées, comprenant les étapes consistant à :
recevoir des eaux usées dans une ou plusieurs zones pour l'élimination biologique de l'azote ; et
effectuer un processus d'élimination biologique de l'azote sur lesdites eaux usées dans lesdites une ou plusieurs zones, dans lequel ledit processus d'élimination biologique de l'azote inclut une première réaction, qui est une réaction de dénitrification partielle dans laquelle du nitrate est réduit en nitrite dans des conditions anoxiques, et une seconde réaction, dans laquelle une partie ou la totalité du nitrite généré est utilisé comme accepteur d'électrons et réduit en diazote par des bactéries anammox, dans lequel ledit procédé comprend une mesure d'azote oxydé, qui est une mesure de la concentration en nitrate,
ledit procédé étant **caractérisé en ce qu'**il comprend, au cours de la première réaction, un ajout d'un donneur d'électrons, dans lequel l'ajout du donneur d'électrons est commandé sur la base de la mesure de la concentration de nitrate pour atteindre un point de consigne de concentration de nitrate d'effluent, ledit point de consigne de concentration de nitrate étant supérieur à 1,5 mg N/L de nitrate comme azote, dans lequel le donneur d'électrons inclut une source de carbone dégradable incluant des alcools, des acides gras volatils, des hydrates de carbone, des carbones d'eaux usées, du carbone provenant de déchets industriels ou de sous-produits de fabrication, du méthane, des aldéhydes et/ou des cétones.

2. Procédé selon la revendication 1, comprenant en outre une mesure d'ammoniac, et dans lequel la mesure d'azote oxydé inclut en outre facultativement une mesure de nitrite, d'oxyde nitreux, d'oxyde nitrique ou d'une combinaison de ceux-ci, et dans lequel le procédé de traitement d'eaux usées inclut une utilisation d'un algorithme pour traiter les mesures d'ammoniac et d'azote oxydé afin de commander ou d'ajuster :
a la limite supérieure ou inférieure sur un dosage de donneur d'électrons, et/ou
b la concentration de nitrite ou son point de consigne, et/ou
c la durée d'une période anoxique, et/ou
d les exigences d'aération ou la durée de période aérobie, et/ou
e la concentration en oxygène dissous ou son point de consigne sur la base d'une concentration en ammoniac et de la mesure de l'azote oxydé afin de supporter la stœchiométrie requise pour la seconde réaction ou la réaction suivante, ou les réactions suivantes

3. Procédé selon la revendication 1 ou la revendication 2, dans lequel le réacteur d'élimination de nutriments biologiques reçoit une bio-augmentation d'hétérotrophes ou d'autotrophes incluant, sans s'y limiter, des organismes anammox à partir d'un réacteur haute résistance présentant une concentration d'alimentation supérieure à 200 milligrammes d'azote d'ammonium par litre.

4. Procédé selon la revendication 1, comprenant en outre une mesure d'ammoniac, dans lequel la concentration d'ammoniac est maintenue à un point de consigne de concentration d'ammoniac d'un demi-milligramme à deux milligrammes d'azote par litre, de manière à maximiser les réactions d'anammox.
